# EUROPEAN PATENT SPECIFICATION

(11) **EP 3 567 277 B1**
(45) Date of publication and mention of the grant of the patent: **06.07.2022**
(21) Application number: 19172453.3
(22) Date of filing: 03.05.2019
(51) Int. Cl.: F16H 1/06, F16D 7/02, F16F 1/368, B60L 53/16, F16F 1/02, F16H 35/10

(54) **DRIVE ELEMENT WITH AN OVERLOAD COUPLER FOR AN ELECTRICAL CONNECTOR WITH A DRIVE AND ALSO AN ELECTRICAL CONNECTOR WITH SUCH A DRIVE ELEMENT**
ANTRIEBSELEMENT MIT EINER ÜBERLASTKUPPLUNG FÜR EINEN ELEKTRISCHEN STECKVERBINDER MIT EINEM ANTRIEB UND ELEKTRISCHER STECKVERBINDER MIT SOLCH EINEM ANTRIEBSELEMENT
ÉLÉMENT D'ENTRAÎNEMENT AVEC COUPLEUR DE SURCHARGE POUR CONNECTEUR ÉLECTRIQUE DOTÉ D'UN ENTRAÎNEMENT ET CONNECTEUR ÉLECTRIQUE DOTÉ D'UN TEL ÉLÉMENT D'ENTRAÎNEMENT

(30) Priority: 07.05.2018 DE 102018207087
(43) Date of publication of application: 13.11.2019
(73) Proprietor: TE Connectivity Germany GmbH, 64625 Bensheim (DE)
(72) Inventor: Listing, Martin, 63225 Langen (DE); Heiss, Dominik, 69234 Dielheim (DE); Schwan, Ralf, 64683 Einhausen (DE); Müller, Thomas, 63225 Langen (DE); Schecker, Michael, 64347 Griesheim (DE)
(74) Representative: Grünecker Patent- und Rechtsanwälte PartG mbB

(56) References cited:
- DE-A1-102015 114 878
- US-A- 1 165 772
- US-A- 4 702 122
- US-A1- 2014 169 865

## Description

The invention relates to a drive element for an electrical connector, the drive element having a gear wheel and a hub part forming a hub, wherein the hub part is held in a form-fitting manner in the gear wheel in an axial direction, wherein the gear wheel is part of a gear-wheel part, into which the hub part is inserted, and wherein the hub part is held in a frictionally locking manner in the gear-wheel part in a circumferential direction, thereby forming a friction-based overload coupler between the gear wheel and the hub part, wherein the overload coupler has, for the axial form-fitting connection of the hub part and the gear-wheel part, at least one radially projecting projection and a recess, which is complementary to the projection, in which the projection is received displaceably in the circumferential direction and fixed in the axial direction when the drive element is put together. The invention further relates to an electrical connector with such a drive element. Such drive elements are used, for example, in the prior art in charging connectors, particularly charging sockets for electric vehicles. To charge the electric vehicle, the charging connectors are locked by way of a displaceable bolt. To displace the bolt, a drive is provided, for example in the form of an electric motor. The drive element, usually a sprocket as part of a gear unit, is situated between the drive and the bolt.

Overload couplers are, for instance, shown in form of a torque-limiting radial friction clutch in US 4 702 122 A or in form of a slip-gear in US 1 165 772 A. A solution comprising an elastic torque-limiting element is shown in DE 10 2015 114 878 A1, which discloses a gear for electric motors. A lock device for (un)locking a locking subject related to a power port of an electric vehicle is, for instance, shown in US 2014/169865 A1.

In practice, it has been shown that the service life of such plugs does not yet satisfy the highest requirements. Consequently, the object forming the basis of the invention is to provide a drive element or an electrical connector with an increased service life.

This problem is solved, according to the invention, for the drive element mentioned at the outset in that the recess extends continuously in the circumferential direction.

For an electrical connector with a driven element, for example a locking bolt, and a drive driving the driven element, this problem is solved by such a drive element, which is situated between the drive and the driven element.

Through the use of such an overload coupler, the service life of the plug can be lengthened surprisingly. As a result of the overload coupler, the effects of acceleration and braking on the service life of the drive element appear to be mitigated. In particular, a failure of the drive element or of the entire electrical connector owing to a broken tooth can be prevented successfully by way of the inventive measures.

Hereinafter, features which are respectively advantageous per se and which develop the invention independently of one another are described in more detail. The features below can be combined with one another as desired.

Thus, in a first configuration according to the invention, the overload coupler can project axially not over the gear wheel. This means that the drive element with overload coupler takes up the same installation space as a conventional drive element without overload coupler. Consequently, with this configuration a drive element with overload coupler can be used instead of the conventional drive element without overload coupler without structurally changing the electrical connector.

The gear wheel is preferably an externally toothed gear wheel, which facilitates the construction and assembly of a gear unit of the electrical connector.

In particular, the drive element is an injection-moulded part preferably made of plastic, so that it can be produced inexpensively, with low tolerances in high quantities.

A preferably coaxial pinion can be integrated monolithically into the drive element. According to a configuration, the pinion protrudes axially from the gear wheel or is axially offset with respect to the gear wheel, such that the drive element can be used as part of a gear unit.

A shaft section, preferably likewise projecting axially from the gear wheel, can be situated between the pinion and the overload coupler. In another configuration, such a shaft section can be absent and the pinion can adjoin the gear wheel directly in the axial direction or can also form the hub, without there being a spacing between the pinion and the gear wheel in the axial direction. The pinion preferably has a smaller number of teeth or a smaller diameter than the gear wheel.

Furthermore, axially projecting axle journals for the rotary placement of the drive element in the electrical connector can be designed monolithically with the hub of the drive element.

The pinion, the shaft section and/or the axle journals represent preferred axial extensions of the hub.

The overload coupler is configured as a friction coupler, in which a torque can be transmitted between the hub and the gear wheel via a frictional connection. A coupler configured in this way is simple and inexpensive to produce.

The overload coupler can have a radially inwardly or outwardly directed, preferably annular friction surface. The friction surface can form, in particular, a gear-wheel part of the overload coupler. The friction surface is preferably aligned coaxially or concentrically to a rotation axis of the gear wheel.

The overload coupler preferably has a predetermined overload moment or slip moment, such that it acts as a torque limiter. If the slip moment is not yet reached, the overload coupler forms a rotationally fixed connection between the hub and the gear wheel. If the slip moment is exceeded, the overload coupler slips through and only a residual moment is transmitted.

The separate hub part is inserted into the gear wheel, which hub part is held in a frictionally locking manner in the gear wheel in the circumferential direction and is part of the overload coupler. In particular, the hub part is supported on the friction surface of the gear wheel in a frictionally locking manner in the radial direction. In this case, the hub part forms the hub of the drive element monolithically.

In order to connect the hub part captively to the gear wheel, the hub part is held in a form-fitting manner in the gear wheel in the axial direction.

The drive element can be put together simply, when the hub part is axially latched, for example clipped, in the gear wheel. Thus, in order to put the drive element together, the hub part only has to be pressed in the axial direction into the gear wheel. The drive element preferably consists only of the hub part and of the gear wheel, such that only these two elements have to be joined together in order to produce the drive element.

An axial form-fitting connection can be achieved, for example, by way of axially blocking or axially latching form-fitting elements, which can be moved in the circumferential direction relative to one another. The overload coupler contains, for latching, at least one radially projecting projection extending in the circumferential direction at least in sections, for example a burr or a rib, and a recess which is complementary to the projection and which receives the projection. Depending on the configuration, the projection can project inwards or outwards in the radial direction. Accordingly, the complementary recess can spring back outwards or inwards in the radial direction. The recess extends continuously in the circumferential direction, such that the projection in the recess can revolve in the circumferential direction completely around the rotation axis of the drive element when the coupler slips through.

In a variant of the above-depicted configuration, the annular friction surface can also be arranged on the hub part.

The overload coupler preferably has a plurality of radially elastic spring elements, spaced apart from one another in the circumferential direction, which press against a radially opposite friction surface when the drive element is joined together. The spring elements generate the torque-transmitting frictional connection of the overload coupler.

In a variant, the radially elastic spring elements can be arranged on the hub part and the radially opposite friction surface can be arranged on the gear wheel. Alternatively, the radially elastic friction elements can also be arranged on the gear wheel and the radially opposite friction surface can be arranged on the hub part. As already explained above, the friction surface is preferably annular. In order to be able to use as large a friction surface as possible for the frictional connection, the arrangement of the spring elements at the hub part is more advantageous, because in this way the friction surface comes to rest further to the outside in the radial direction.

A simple configuration with a long service life can be achieved when at least one spring element has a section extending in a curved manner in the circumferential direction, in particular a leaf-spring-like section. The arcuate or curved section is pressed against the friction surface in order to generate the frictional connection when the drive element is fully mounted. Such a spring element is, moreover, constructed simply and is correspondingly simple to produce. In particular, such a spring element can also be moulded monolithically with the hub part or with the gear wheel in an injection-moulding method.

If the spring element is situated inside the friction surface in the radial direction, the arcuate section is preferably curved more heavily than the friction surface radially opposite the spring element. If the spring element is situated outside the hub part in the radial direction, the arcuate section is preferably curved less heavily than the friction surface opposite the spring element.

In order to save material and increase elasticity, the arcuate section can be connected to the rest of the hub part or to the rest of the gear wheel via at least one spoke.

In a further configuration, the curved section can be formed by a band-shaped element, which, in the case of the finally mounted drive element, is pressed against the friction surface in a section between its two ends. In the case of such a configuration, the band-shaped element acts as a leaf spring, which is deflected in the radial direction and generates the frictional connection.

The band-shaped element preferably has, in the axial direction, a depth which is greater than its material thickness in the radial direction or in the direction perpendicular to the axial direction.

The band-shaped section can be connected, at at least one end, to the hub or to the gear wheel and can form a base point there. At the base point, the band-shaped section can extend away from the hub or from the gear wheel in the radial direction. At its other end, the band-shaped section can be curved back to the hub or to the gear wheel in the radial direction. The other end can be a free end or can likewise be connected to the hub or to the gear wheel and thus can form a second base point. As a result of the curvature, on the one hand it is achieved that the spring element nestles against the friction surface and on the other hand radial elasticity is achieved in a constructive manner.

At least one bent or heavily curved region can be situated between a base point of at least one spring element and the section of the spring element bearing against the friction surface opposite the spring element. The deformation of the spring element can be concentrated, for example, in the bent or heavily curved region.

The at least one spring element is preferably configured as a loop. This means, for example, that the spring element has two base points on the hub (or alternatively on the gear wheel), which bind the end of the loop and at which the spring element is connected to the hub (or alternatively to the gear wheel).

When the at least one spring element is part of the hub part, the loop preferably extends radially outwards, i.e. away from the rotation axis of the drive element. The base point or points of the spring element are situated on the hub. If, in contrast, the at least one spring element is situated on the gear wheel, the loop preferably extends radially inwards and the base points are situated on the gear wheel.

According to a further advantageous configuration, the two base points of a loop are spaced further apart from one another in the circumferential direction than the adjacent base points of two successive loops in the circumferential direction. As a result of a large spacing between two base points of a loop, large spans can be achieved, such that the spring element bears flat on the friction surface in order to generate high friction and is simultaneously sufficiently elastic.

In a particular configuration of a loop, this can, at least in the undeformed state or at least in the deformed state, be lenticular or elliptical in an axial view, with a region with lower curvature bearing against the friction surface. The lenticular or elliptical shape thus leads to a more extensive bearing than a circular loop, for example. However, if the disadvantage of a smaller bearing area between the spring element and the friction surface is accepted, a circular configuration of the loop is also possible.

The loop-shaped configuration of the spring element can be injection moulded in a particularly simple manner. In the case of such a configuration, a partition of the injection mould can lie between a pinion moulded on the hub part and the loop or else in the loop itself. By way of example, a circumferential shoulder can be arranged between the pinion and the loop. The inner contour of the loop can continue from the hub in the axial direction somewhat in the direction of the pinion, in order to form the shaft section between the pinion and the hub.

In the case of the electrical connector, there is preferably a stop, the driven element being moved against the stop in at least one end position. Precisely the combination of such a mechanical stop with the overload coupler in the drive element leads to a considerably increased service life in comparison with the prior art.

Hereinafter, the invention is explained in greater detail by way of example using an exemplary embodiment. For elements that correspond to one another in terms of function and/or construction, the same reference numbers are used in the figures in each case.

It should be noted that the combination of features of the described embodiment can be modified in accordance with the above implementation. Conversely, a further, above-described feature can be added to the described embodiment if the technical effect of that feature is advantageous for a specific application.

In the drawings:
- Fig. 1: shows a schematic depiction of an electrical connector with a drive element not according to the invention;
- Fig. 2: shows a schematic, perspective exploded depiction of a drive element not according to the invention;
- Fig. 3: shows a schematic perspective depiction of a drive element not according to the invention in the put-together state.

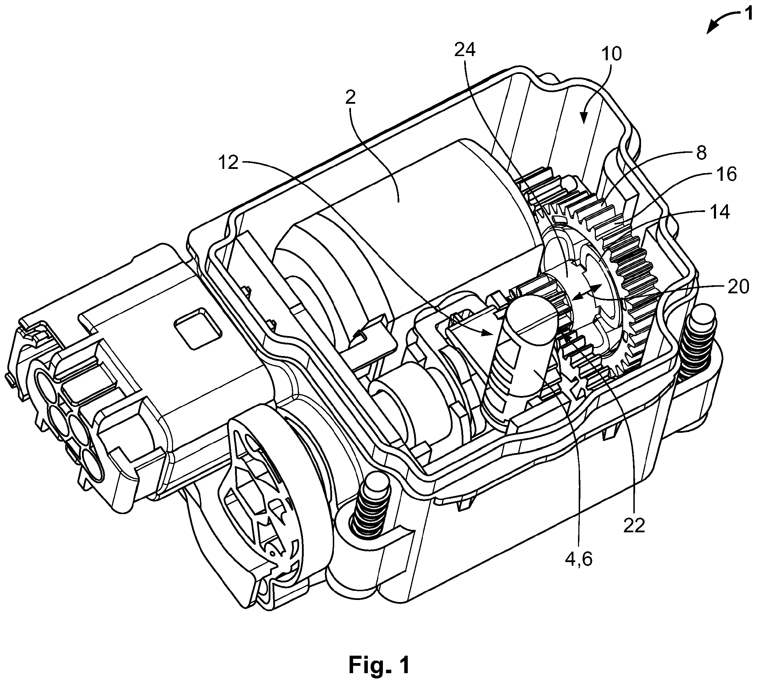

Fig. 1 shows an electrical connector 1, as used as a charging socket for an electric vehicle, for example. The electrical connector 1 has a drive 2, for example an electric motor, and a driven element 4, for example a locking bolt 6. Situated between the drive 2 and the driven element 4, there is a drive element 8, which is configured in particular as a sprocket and can be part of a gear unit 10. The electrical connector 1 can furthermore have at least one preferably mechanical stop 12, against which the driven element 4 is moved in a fully extended (depicted in Fig. 1) or a fully retracted position.

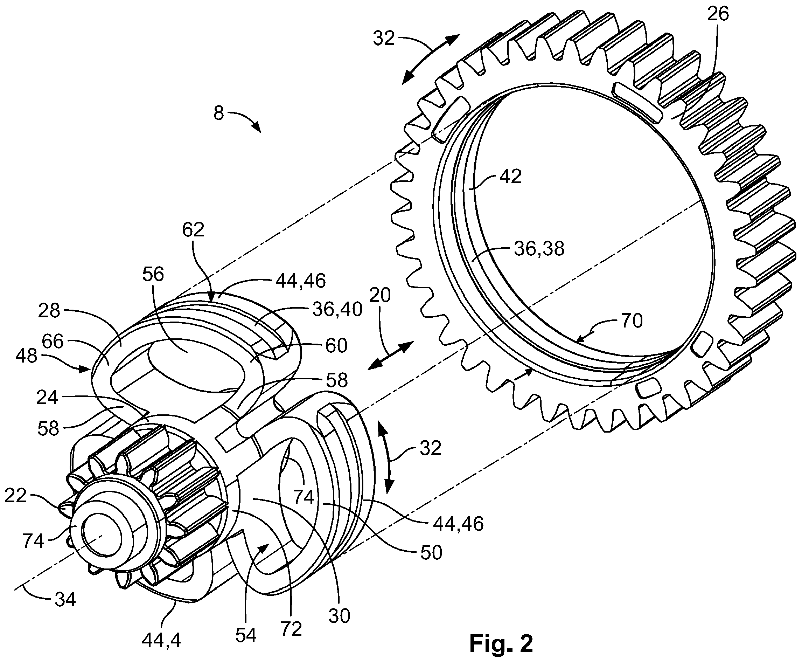

As explained in greater detail hereinbelow with reference to Fig. 2, the drive element 8 has an overload coupler 14 between a gearwheel 16 and a hub. The overload coupler 14 protrudes in the axial direction 20 not beyond the gear wheel 16. The overload coupler limits the maximum torque transmitted between the hub 30 and the gear wheel 16 to a predetermined torque.

The overload coupler can be designed in particular as a sliding coupler, which slips through from a predetermined slip moment. If the slip moment is not yet reached, the hub and the gear wheel are connected to one another in a rotationally fixed manner. When the slip moment is exceeded, the hub and the gear wheel rotate relative to one another, the overload coupler slips through and the overload coupler transmits only a reduced residual moment. The overload coupler thus acts as a torque limiter.

The drive element 8 can furthermore also have a pinion 22, which is preferably aligned coaxially to the gear wheel 16 and is offset in the axial direction relative to the gear wheel 16. A shaft section 24, which is preferably untoothed, can be situated between the hub and the pinion 22.

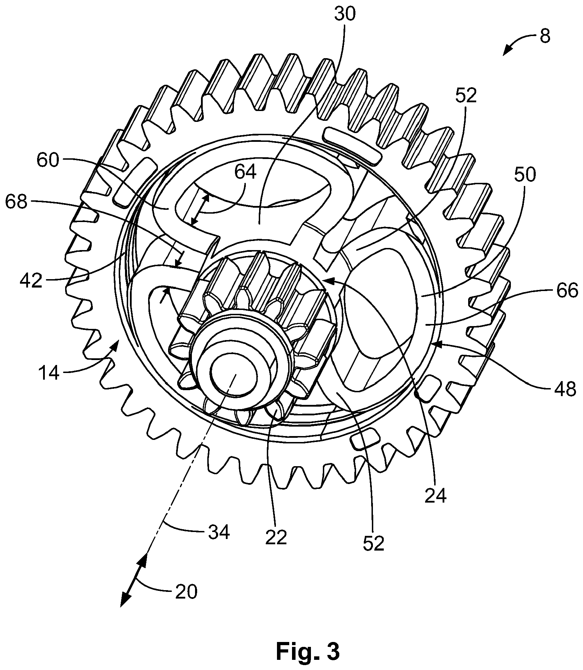

The drive element 8 is explained with respect to construction and function in greater detail below with reference to Figs 2 and 3. The drive element 8 preferably consists only of two parts, namely a gear-wheel part 26 forming the gear wheel 16, and a hub part 28 which forms the hub 30 of the drive element 8. The gear-wheel part 26 and the hub part 28 are preferably injection-moulded parts and produced from plastic. The gear-wheel part 26 and the hub part 28 together form the overload coupler 14.

In order to assemble the drive element 8, the hub part 28 is inserted into the gear-wheel part 26 in the axial direction 20. The hub part 28 is held captively in the gear-wheel part 26 in the axial direction by way of an axially blocking form-fitting connection. In the circumferential direction 32 around the axial direction 20 or the rotation axis 34 of the drive element 8, the hub part 28 is preferably held only in a frictionally locking manner in the gear-wheel part 26. A friction-based overload coupler arises from the frictionally locking hold.

In order to simplify the assembly of the hub part 28 with the gear-wheel part 26, the hub part 28 is latched in the gear-wheel part 26 in the axial direction 20 or is clipped into the gear-wheel part 26.

The form-fitting elements 36, which effect an axial securing of the hub part 28 in the gear-wheel part 26, contains at least one radially projecting rib 38 concentric to the gear wheel and running in the circumferential direction, and at least one groove-shaped recess 40 configured complementary to the rib 38 and continuous in the circumferential direction 32. The recess 40 is preferably concentric to the gearwheel. In the put-together state, the at least one rib 38 is received in the at least one receptacle 40.

The form-fitting elements 36 thus serve not only for the axial securing but also for guiding in the circumferential direction, in order to define the plane in which a relative rotation between the gear-wheel part 26 and the hub part 28 is possible when the coupler slips through. Instead of the configuration depicted in Fig. 2 with a single continuous rib, several ribs spaced apart from one another in the circumferential direction can, of course, also be provided. Moreover, instead of a single rib, a fluting running in the circumferential direction, or a plurality of projections aligned in a ring shape, arranged next to one another in the axial direction, can, for example, be present both at the hub part 28 and at the gear-wheel part 26, the flutings of the hub part 28 and the gear-wheel part 26 being splined with one another in the axial direction 20 in such a configuration.

The rib 38 is actually moulded on the gear-wheel part 26 in Fig. 2. However, in one variant, it can also be designed on the hub part 28, such that the recess 40 is then situated correspondingly on the gear-wheel part 26.

The overload coupler 14 has a friction surface 42 at the gear-wheel part and a friction surface 44 at the hub part. One of the two friction surfaces 42, 44, here the friction surface 44 at the hub part, does not have to be continuous in the circumferential direction 32, but rather can be divided into several partial surfaces 46 spaced apart from one another in the circumferential direction.

When the drive element is put together, the friction surfaces 42, 44 are pressed against one another, in order to permit the transmission of a drive moment from the drive 2 to the driven element 4 (Fig. 1).

In order to produce the frictional connection, the overload coupler 14 has at least one radially elastic spring element 48, which is elastically deformed in the radial direction when the hub part 28 is inserted into the gear-wheel part 26 and which presses one friction surface against the other friction surface in order to produce a frictional connection between the hub part 28 and the gear-wheel part 26. The overload coupler 14 preferably has a plurality of radially elastic spring elements 48 preferably evenly spaced apart from one another in the circumferential direction 32, which press against the radially opposite friction surface, here 42.

Merely by way of example, the spring elements 48 are moulded on the hub part 28 in the exemple not according to the invention depicted in Fig. 2. They can also be moulded on the gear-wheel part 26 in a variant that is not shown. In this case, the annular friction surface 42 would be situated not on the gear-wheel part 26 as in Fig. 2, but on the hub part 28. In particular, the annular friction surface 42 could be formed directly by the hub 30, which is then clipped in the gear-wheel part 26.

Likewise, merely by way of example, three spring elements 48 which follow one another in the circumferential direction are shown in Fig. 2. The number is arbitrary, however there are preferably between two and six spring elements 48.

A spring element 48 has an in particular leaf-spring-like section 50 extending in a curved manner in the circumferential direction 32. The section 50 nestles against the opposite friction surface 42 at least in the region of the friction surface 44, in order to create as large a bearing surface as possible. If the spring element 48 is situated radially inside the opposite friction surface, the section 50 preferably has a heavier curvature than the friction surface 42 lying opposite it.

The arcuate section 50 can be connected to the hub 30 via at least one spoke 52 - or to the gear-wheel part 26 in the case of the spring element 48 arranged on the gear-wheel part 26. If there are two spokes 52 in the case of a spring element 48, a spring element 48 can form a loop 54 projecting in the radial direction. The loop can be configured in a lenticular or elliptical manner, but also a circular manner, in an axial view. Together with the hub 30, the loop 54 forms a passage 56 which is closed in the radial direction and open axially.

The spring element 48 has at least one base point 58 at which it is connected to the gear-wheel part 26 or to the hub part 28, depending on whether the loop is formed by the gear-wheel part 26 or the hub part 28.

If the spring element 48 forms a loop 54 together with the hub, the spring element has two base points 58. The two base points 58 of a loop are, in this case, spaced further apart from one another in the circumferential direction 32 than the two adjacent base points 58 of two spring elements 48 or loops 54 which follow one another in the circumferential direction 32.

At least one bent or heavily curved region 60 can be situated in the region between a base point 58 of a spring element 48 and the section of the spring element 48 bearing against the opposite friction surface 42, that is the friction surface 44.

The curved section 50, the at least one spoke 52 and/or the loop 54 can be formed by a band-shaped section 62 of the hub part 28 or gear-wheel part 26. In this case, a depth 64 of the band 66 forming the band-shaped section 62 is larger, for example more than two or three times larger, than a material thickness 68 of the band 66 perpendicular to the depth 64.

The radially resilient band 66 extends initially away from a base point 58 in the radial direction, it being also possible for there to be a component in the circumferential direction 32. This region forms a spoke 52. It can be curved back in the radial direction at its other end. The other end can be a free end or, as depicted, can end in a further base point 58.

In order to permit simple production in the injection-moulding method, at the hub part 28, a part of the contour of the passage 56 can extend out in the axial direction 20 over the axial depth 70 of the gearwheel 26, which preferably corresponds to the depth 64 of the band 66, and can end in a shoulder 72 which is situated between the hub 30 and the pinion 22. The preferably continuously circumferential shoulder 72 can represent a partition plane of the injection-moulding tool.

The hub part 28 finally has another two axially projecting axle journals 74, in order to be able to position the drive element 8 rotatably in the electrical connector 1.

### Reference numbers

- 1: electrical connector
- 2: drive
- 4: driven element
- 6: locking bolt
- 8: drive element
- 10: gear unit
- 12: stop
- 14: overload coupler
- 16: gear wheel
- 20: axial direction
- 22: pinion
- 24: shaft section
- 26: gear-wheel part
- 28: hub part
- 30: hub
- 32: circumferential direction
- 34: rotation axis
- 36: form-fitting elements
- 38: rib or projection
- 40: recess
- 42: friction surface at the gear-wheel part
- 44: friction surface at the hub part
- 46: partial surface of 44
- 48: spring element
- 50: curved section of the spring element
- 52: spoke
- 54: loop
- 56: passage
- 58: base point
- 60: heavily curved or bent region
- 62: band-shaped section
- 64: depth of the band
- 66: band
- 68: material thickness of the band
- 70: depth of the gear-wheel part
- 72: shoulder
- 74: axle journal

## Claims

1. A drive element (8) for an electrical connector, wherein the drive element (8) has a gear wheel (16) and a hub part (28) forming a hub (30), wherein the hub part (28) is held in a form-fitting manner in the gearwheel (16) in an axial direction (20), wherein the gearwheel (16) is part of a gear-wheel part (26), into which the hub part (28) is inserted, and in that the hub part (28) is held in a frictionally locking manner in the gear-wheel part (26) in a circumferential direction (32), thereby forming a friction-based overload coupler (14) between the gear wheel (16) and the hub part (28), **wherein** the overload coupler (14) has, for the axial form-fitting connection of the hub part (28) and the gear-wheel part (26) at least one radially projecting projection and a recess (40), complementary to the projection, in which the projection is received displaceably in the circumferential direction (32) and fixed in the axial direction when the drive element (8) is put together, **characterised in that** the recess (40) extends continuously in the circumferential direction (32).

2. The drive element (8) according to Claim 1, **characterised in that** the overload coupler (14) projects axially not over the gear wheel.

3. The drive element (8) according to Claim 1 or 2, **characterised in that** the gear-wheel part (26) or the hub part (28) has a radially inwardly directed, circular friction surface (42), which is part of the overload coupler (14).

4. The drive element (8) according to any one of Claims 1 to 3, **characterised in that** the hub part (28) is axially latched in the gear-wheel part (26).

5. The drive element (8) according to any one of Claims 1 to 4, **characterised in that** the overload coupler (14) has a plurality of radially elastic spring elements (48), spaced apart from one another in the circumferential direction (32), which press against a radially opposite friction surface (42, 44).

6. The drive element (8) according to Claim 5, **characterised in that** at least one spring element (48) has a section (50), extending in a curved manner in the circumferential direction (32), which bears against the radially opposite friction surface (42, 44).

7. The drive element (8) according to Claim 5 or 6, **characterised in that** the curved section (50) is formed by a leaf-spring-shaped band (66), which is pressed into a section between its two ends (58) against the radially opposite friction surface (42, 44).

8. The drive element (8) according to any one of Claims 5 to 7, **characterised in that** the at least one spring element (48) extends radially away from a base point (58) at the gear-wheel part or at the hub part, and at least one bent or heavily curved region (60) is situated between the base point and a section of the spring element (48) bearing against the radially opposite friction surface (42, 44).

9. The drive element (8) according to any one of Claims 5 to 8, **characterised in that** at least one of the spring elements (48) forms a loop (54).

10. The drive element (8) according to Claim 9, **characterised in that** a loop (54), at least in the undeformed state or at least in the deformed state, is lenticular, elliptical or circular in an axial view.

11. The drive element (8) according to any one of Claims 1 to 10, **characterised in that** the parts of the drive element are injection moulded.

12. An electrical connector (1) with a driven element (4) and a drive (2) driving the driven element, **characterised by** a drive element (8) according to any one of Claims 1 to 11 between the drive (2) and the driven element (4).

## Patentansprüche

1. Antriebselement (8) für einen elektrischen Verbinder, wobei das Antriebselement (8) ein Zahnrad (16) und einen Nabenteil (28) aufweist, der eine Nabe (30) bildet, der Nabenteil (28) in dem Zahnrad (16) in einer axialen Richtung (20) formschlüssig gehalten wird, das Zahnrad (16) Teil eines Zahnradteils (26) ist, in den der Nabenteil (28) eingeführt ist, und der Nabenteil (28) in einer Umfangsrichtung (32) reibschlüssig arretierend in dem Zahnradteil (26) gehalten wird und so eine auf Reibung basierende Überlastkupplung (14) zwischen dem Zahnrad (16) und dem Nabenteil (28) gebildet wird, wobei die Überlastkupplung (14) für die axiale formschlüssige Verbindung des Nabenteils (28) und des Zahnradteils (26) wenigstens einen radial vorstehenden Vorsprung sowie eine Aussparung (40) aufweist, die komplementär zu dem Vorsprung ist und in der der Vorsprung in der Umfangsrichtung (32) verschiebbar aufgenommen und in der axialen Richtung fixiert ist, wenn das Antriebselement (8) zusammengesetzt ist, **dadurch gekennzeichnet, dass** sich die Aussparung (40) durchgehend in der Umfangsrichtung (32) erstreckt.

2. Antriebselement (8) nach Anspruch 1, **dadurch gekennzeichnet, dass** die Überlastkupplung (14) axial nicht über das Zahnrad hinaus vorsteht.

3. Antriebselement (8) nach Anspruch 1 oder 2, **dadurch gekennzeichnet, dass** der Zahnradteil (26) oder der Nabenteil (28) eine radial nach innen gerichtete, kreisförmige Reibfläche (42) aufweist, die Teil der Überlastkupplung (14) ist.

4. Antriebselement (8) nach einem der Ansprüche 1 bis 3, **dadurch gekennzeichnet, dass** der Nabenteil (28) in dem Zahnradteil (26) axial verriegelt ist.

5. Antriebselement (8) nach einem der Ansprüche 1 bis 4, **dadurch gekennzeichnet, dass** die Überlastkupplung (14) eine Vielzahl radial elastischer Federelemente (48) aufweist, die in der Umfangsrichtung (32) voneinander beabstandet sind und an eine radial gegenüberliegende Reibfläche (42, 44) drücken.

6. Antriebselement (8) nach Anspruch 5, **dadurch gekennzeichnet, dass** wenigstens ein Federelement (48) einen Teilabschnitt (50) aufweist, der sich in der Umfangsrichtung (32) bogenförmig erstreckt und an der radial gegenüberliegenden Reibfläche (42, 44) anliegt.

7. Antriebselement (8) nach Anspruch 5 oder 6, **dadurch gekennzeichnet, dass** der gekrümmte Teilabschnitt (50) durch einen blattfederförmigen Streifen (66) gebildet wird, der in einen Teilabschnitt zwischen seinen zwei Enden (58) hinein an die radial gegenüberliegende Reibfläche (42, 44) gedrückt wird.

8. Antriebselement (8) nach einem der Ansprüche 5 bis 7, **dadurch gekennzeichnet, dass** sich das wenigstens eine Federelement (48) von einem Basispunkt (58) an dem Zahnradteil oder an dem Nabenteil radial weg erstreckt und sich zwischen dem Basispunkt und einem an der radial gegenüberliegenden Reibfläche (42, 44) anliegenden Teilabschnitt des Federelementes (48) wenigstens ein gebogener oder stark gekrümmter Bereich (60) befindet.

9. Antriebselement (8) nach einem der Ansprüche 5 bis 8, **dadurch gekennzeichnet, dass** wenigstens eines der Federelemente (48) eine Schleife (54) bildet.

10. Antriebselement (8) nach Anspruch 9, **dadurch gekennzeichnet, dass** eine Schleife (54) wenigstens in dem unverformten Zustand oder wenigstens in dem verformten Zustand in einer axialen Ansicht linsenförmig, elliptisch oder kreisförmig ist.

11. Antriebselement (8) nach einem der Ansprüche 1 bis 10, **dadurch gekennzeichnet, dass** die Teile des Antriebselementes spritzgegossen sind.

12. Elektrischer Verbinder (1) mit einem angetriebenen Element (4) und einem das angetriebene Element antreibenden Antrieb (2), **gekennzeichnet durch** ein Antriebselement (8) nach einem der Ansprüche 1 bis 11 zwischen dem Antrieb (2) und dem angetriebenen Element (4).

## Revendications

1. Élément d'entraînement (8) destiné à un connecteur électrique, l'élément d'entraînement (8) comportant une roue dentée (16) et un composant moyeu (28) formant un moyeu (30), le composant moyeu (28) étant maintenu par complémentarité de forme dans la roue dentée (16) dans la direction axiale (20), la roue dentée (16) faisant partie d'un composant roue dentée (26) dans lequel est inséré le composant moyeu (28), et en ce que le composant moyeu (28) est maintenu par verrouillage par frottement dans le composant roue dentée (26) dans la direction circonférentielle (32), ce qui forme ainsi un coupleur de surcharge à frottement (14) entre la roue dentée (16) et le composant moyeu (28), le coupleur de surcharge (14) comportant, pour le raccordement par complémentarité de forme du composant moyeu (28) et du composant roue dentée (26), au moins une protubérance dépassant radialement et un évidement (40), complémentaire à la protubérance, dans lequel est reçue la protubérance pour pouvoir se déplacer dans la direction circonférentielle (32), et est fixée dans la direction axiale lorsque l'élément d'entraînement (8) est mis en place, **caractérisé en ce que** l'évidement (40) s'étend de manière continue dans la direction circonférentielle (32).

2. Élément d'entraînement (8) selon la revendication 1, **caractérisé en ce que** le coupleur de surcharge (14) dépasse axialement et pas au-dessus de la roue dentée.

3. Élément d'entraînement (8) selon la revendication 1 ou la revendication 2, **caractérisé en ce que** le composant roue dentée (26) ou le composant moyeu (28) comporte une surface de frottement (42) circulaire dirigée vers l'intérieur radialement qui fait partie du coupleur de surcharge (14).

4. Élément d'entraînement (8) selon l'une quelconque des revendications 1 à 3, **caractérisé en ce que** le composant moyeu (28) est verrouillé axialement dans le composant roue dentée (26).

5. Élément d'entraînement (8) selon l'une quelconque des revendications 1 à 4, **caractérisé en ce que** le coupleur de surcharge (14) comporte une pluralité d'éléments de ressort (48) élastiques, radialement espacés l'un de l'autre dans la direction circonférentielle (32), lesquels pressent contre une surface de frottement (42, 44) opposée radialement.

6. Élément d'entraînement (8) selon la revendication 5, **caractérisé en ce qu'**au moins un élément de ressort (48) présente une section (50), s'étendant de manière incurvée dans la direction circonférentielle (32), qui s'appuie contre la surface de frottement (42, 44) opposée radialement.

7. Élément d'entraînement (8) selon la revendication 5 ou la revendication 6, **caractérisé en ce que** la section incurvée (50) est formée d'une bande en forme de ressort à lame (66) qui est pressée dans une section située entre ces deux extrémités (58) contre la surface de frottement (42, 44) opposée radialement.

8. Élément d'entraînement (8) selon l'une quelconque des revendications 5 à 7, **caractérisé en ce qu'**au moins un élément de ressort (48) s'étend radialement à distance d'un point de base (58) au niveau du composant roue dentée ou bien du composant moyeu, et au moins une zone (60) pliée ou incurvée fortement est située entre le point de base et une section de l'élément de ressort (48) s'appuyant contre la surface de frottement (42, 44) opposée radialement.

9. Élément d'entraînement (8) selon l'une quelconque des revendications 5 à 8, **caractérisé en ce qu'**au moins l'un des éléments de ressort (48) forme une boucle (54).

10. Élément d'entraînement (8) selon la revendication 9, **caractérisé en ce qu'**une boucle (54), au moins à l'état non déformé ou à l'état déformé, est lenticulaire, elliptique ou circulaire selon une vue axiale.

11. Élément d'entraînement (8) selon l'une quelconque des revendications 1 à 10, **caractérisé en ce que** les composants de l'élément d'entraînement sont moulés par injection.

12. Connecteur électrique (1) comportant un élément entraîné (4) et un dispositif d'entraînement (2) qui entraîne l'élément entraîné, **caractérisé par** un élément d'entraînement (8) conforme à l'une quelconque des revendications 1 à 11 situé entre le dispositif d'entraînement (2) et l'élément entraîné (4).
